Europäisches Patentamt

European Patent Office

Office européen des brevets

(19)

(11) Veröffentlichungsnummer: **0 080 525**

**A1**

(12) ## EUROPÄISCHE PATENTANMELDUNG

(21) Anmeldenummer: 81110005.6

(22) Anmeldetag: 30.11.81

(51) Int. Cl.³: **C 03 B 7/06**
**H 05 B 3/00**

(43) Veröffentlichungstag der Anmeldung:
08.06.83 Patentblatt 83/23

(84) Benannte Vertragsstaaten:
AT BE CH DE FR GB IT LI NL SE

(71) Anmelder: Sorg GmbH & Co. KG
Im Aller 23
D-8770 Lohr/Main(DE)

(72) Erfinder: Sims, Richard
Steinweg 6
D-8770 Lohr-Steinbach(DE)

(74) Vertreter: Schulze Horn, Stefan, Dipl.-Ing. et al,
Patentanwälte Dipl.-Ing. S. Schulze Horn M.SC. Dr. H.
Hoffmeister Goldstrasse 36
D-4400 Münster(DE)

(54) **Verbesserter elektrisch beheizter Speiser.**

(57) Elektrisch beheizter Speiser eines Glasschmelzofens, bei welchem in den Glasstrom stabförmige Elektroden eintauchen, zwischen denen elektrischer Strom zur Homogenisierung der Temperatur des Glasstromes fließt, wobei die Elektroden jeweils paarweise eingesetzt sind und die Ausgänge der Sekundärwicklung eines Regeltransformators mit mindestens je einer Elektrode eines Paares verbunden sind, wobei die Elektroden jedes Paares mit Abstand voneinander nebeneinander in den Speiserseitenwänden eingesetzt sind und sich jeweils zwei Elektroden gegenüberliegen.

Fig 4

EP 0 080 525 A1

## Hochleistungsspeiser

Die Erfindung betrifft einen elektrisch beheizten Speiser eines Glasschmelzofens, bei welchem in den Glasstrom stabförmige Elektroden eintauchen, zwischen denen elektrischer Strom zur Homogenisierung der Temperatur des Glasstromes fließt, wobei die Elektroden jeweils paarweise eingesetzt sind und die Ausgänge der Sekundärwicklung eines Regeltransformators mit mindestens je einer Elektrode eines Paares verbunden sind.

Speiser der genannten Art sind seit langem bekannt und weisen gegenüber konventionell von oben durch Flammen beheizte Speiser erhebliche Vorteile auf. Es gibt in diesem Zusammenhang prinzipiell vier Möglichkeiten, die Elektroden in dem Speiser anzuordnen:

1. Einzeln durch die Seitenwand mit relativ kurzen Eintauchtiefen (50 - 150 mm)

2. Einzeln waagerecht durch die Seitenwand mit relativ langen Eintauchtiefen (300 - 900 mm)

3. Senkrecht von unten durch den Speiserboden

4. Senkrecht von oben durch den Oberbau.

Diese Systeme sind seit längerem bekannt. Der Stromfluß findet dabei bei der Anordnung Nr. 2 in der Speiser-Längsachse, primär zwischen benachbarten Elektroden statt.

Das Glas in der Kanalmitte ist normalerweise heißer als Glas in anderen Teilen des Speiserquerschnitts. Dabei besteht die Gefahr, daß auf Grund des niedrigeren Widerstandes des heißeren Glases und des damit verbundenen höheren Stromflusses dieses Glas noch weiter aufgeheizt wird, so daß die thermische Homogenität statt verbessert tatsächlich verschlechtert wird.

Auch bei den Systemen 1 und 3, die einander ähnlich sind, besteht die Gefahr einer bevorzugten Beheizung des bereits heißeren Glases. Bei System 2 kann aber durch gezielte Plazierung der Elektroden ein gewisser Einfluß auf den Stromfluß erreicht werden. Das System 4 besitzt keine größere Bedeutung.

Aufgabe der Erfindung ist es daher, einen verbesserten Speiser zu schaffen, bei dem die genannten Nachteile nicht mehr auftreten, bei dem also eine praktisch vollkommene Homogenisierung des durch den Speiser fließenden Glasstromes erfolgt und bei welchem insbesondere die kalten Stromfäden aufgeheizt werden können.

Die verbesserte Homogenisierung des Glases hinsichtlich der Temperatur und der chemischen Zusammensetzung verringert die Ausschußquote bei der Produktion von Glasgegenständen, insbesondere bei maschinell gefertigten Glasgegenständen, wie Flaschen, und ist daher sehr wichtig.

Durch die Erfindung soll weiterhin die erfindungsgemäße Aufgabe wirtschaftlich, sicher und kontrollierbar gelöst werden.

Diese Aufgabe wird dadurch gelöst, daß bei dem eingangs genannten Speiser die Elektroden jedes Paares mit Abstand voneinander nebeneinander in den Speiserseitenwänden eingesetzt sind und sich jeweils zwei Elektroden gegenüberliegen.

Vorteilhaft können die Elektroden eines Paares auch an gegeneinander liegenden Seitenwänden des Speisers angeordnet sein, wobei zwischen den Elektroden eines Paares die Elektroden eines weiteren angeordnet sein können, die sich direkt gegenüberliegen, wodurch sich also zusätzlich zur primär längs des Speisers verlaufenden Richtung des Strompfades auch noch ein an sich bekannter querverlaufender Strompfad ausgebildet wird.

Bekanntlich beeinflussen sich nebeneinander liegende Strompfade, wobei eine gewisse Verdrängung aufgrund des vorhandenen Widerstandes stattfindet. Um eine vollkommen gleichmäßige Beeinflussung des durchlaufenden Glasstromes zu erhalten, können weiterhin die Elektroden zweier Paare sich gegenüberliegend übereinander angeordnet sein und die Elektroden können in der Länge des Speisers gesehen in unterschiedlichen Höhen angeordnet sein.

Die Erfindung verbessert die Homogenisierung des durch einen Speiser fließenden Glases in größerem Umfang und da die erfindungsgemäße Lösung auch wirtschaftlich ist, kann von einer idealen Lösung der anstehenden Probleme gesprochen werden.

Im folgenden werden Ausführungsbeispiele der Erfindung anhand von Zeichnungen näher beschrieben. Es zeigen:

Figur 1 einen bekannten Speiser mit längsverlaufendem Stromfluß zwischen tief in das Glasbad eintauchenden Elektroden,

Figur 2 die erfindungsgemäße Elektrodenanordnung mit längsverlaufendem Strompfad,

Figur 3 eine Elektrodenanordnung mit sich kreuzenden Strompfaden,

Figur 4 eine Elektrodenanordnung mit sowohl längsverlaufender als auch querverlaufender Anordnung der Strompfade,

Figur 5 eine Anordnung der Elektroden mit einem über die Längsrichtung des Speisers gesehenen Höhenversatz sowie

Figur 6 übereinander angeordnete Elektrodenpaare, bei denen die Strompfade quer über den Speiser verlaufen.

Gemäß den Figuren besteht der erfindungsgemäße Speiser aus Feuerfestmaterial 1, welches eine Wanne ausbildet, in der ein Glasstrom von einem Glasschmelzofen zu dem Speiserkopf verläuft. Das Glas wird dort tropfenweise abgezogen und in Glasverarbeitungsmaschinen weiterverarbeitet. Es ist wesentlich, daß das abgezogene Glas sowohl hinsichtlich der Temperatur als auch seiner chemischen Zusammensetzung beim Abzug vollkommen homogen ist, wobei wegen der Eigenschaften bei der Weiterverarbeitung die Einstellung einer bestimmten Temperatur erforderlich ist.

Das mit 2 bezeichnete Glasbad wird während des Durchströmens des Speisers mittels Elektroden 3 aufgeheizt, die in das Glasbad hineinragen und wobei zwischen jeweils einem Paar der Elektroden ein Strompfad entsteht. Die Elektroden sind leitend mit der Sekundärwicklung eines Stelltransformators verbunden, der regelbar ist und an das vorhandene Stromnetz angeschlossen ist.

Es können jeweils nur die Elektroden eines Paares oder auch Gruppen von Elektroden an einen Transformator angeschlossen sein, wobei die Regelung des Transformators in Abhängigkeit von Temperaturfühlern erfolgen kann.

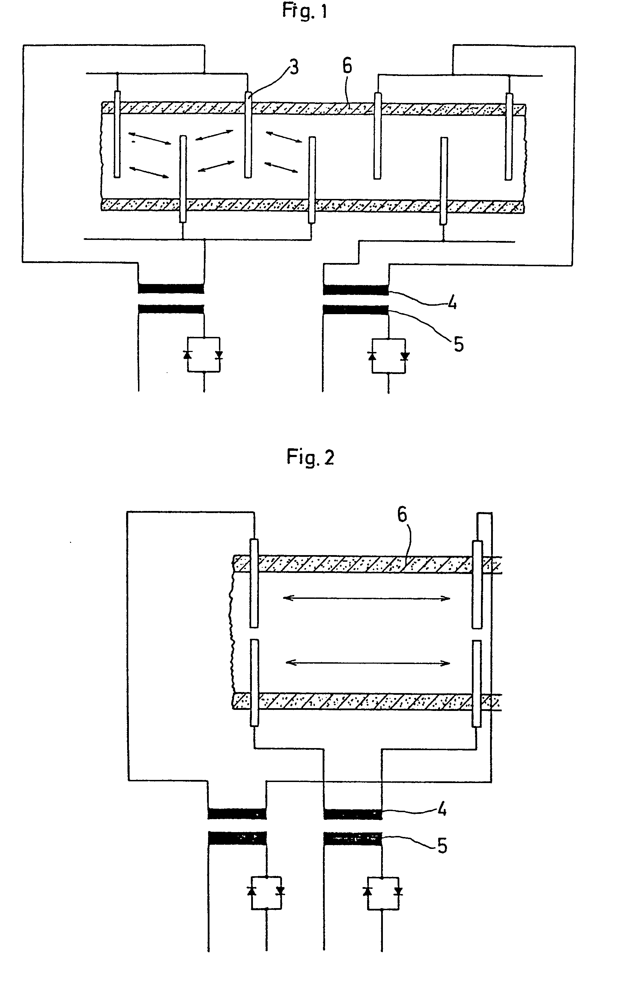

Gemäß Figur 2 ist die erfindungsgemäße Schaltung derart, daß sich Elektroden paarweise gegenüberliegen, der Stromfluß aber zwischen nebeneinander angeordneten Elektrodenpaaren erfolgt. Die Elektroden eines Paares sind also nebeneinander in einer Seitenwand 6 des Speisers angeordnet.

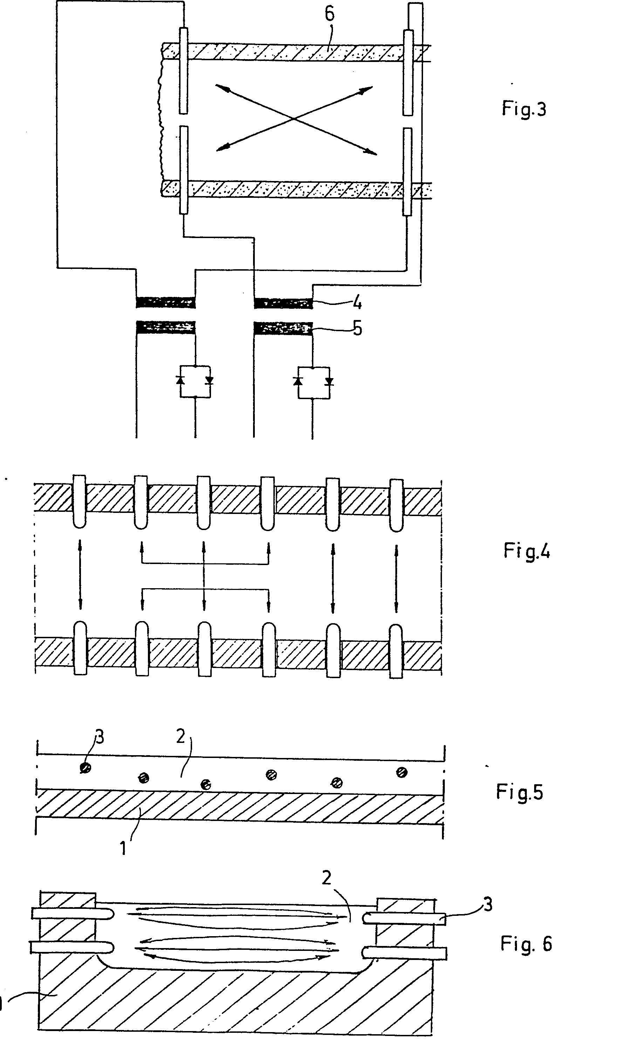

Gemäß Figur 3 kann die Elektrodenanordnung auch derart vorgenommen werden, daß die Elektroden eines Paares in der Länge des Speisers versetzt in den gegenüberliegenden Speiserwänden eingesetzt sind, so daß sich die Strompfade der gegenüberliegenden Elektroden kreuzen.

In einer weiteren Ausgestaltung gemäß Figur 4 verläuft der Strompfad zwischen den Elektroden eines Paares, die nebeneinander in einer der Seitenwände des Speisers eingesetzt sind. Zwischen den Elektroden eines Paares kann aber eine weitere Elektrode eines anderen Paares eingesetzt sein, deren Gegenelektrode in der gegenüberliegenden Speiserwand angebracht ist. Die Strompfade kreuzen sich also praktisch rechtwinklig und es wird sowohl die kältere Randzone aufgeheizt, als auch eine Temperierung des mittigen Glasflusses vorgenommen.

Um den gesamten Glasstromquerschnitt weiterhin beeinflussen zu können, können Elektrodenpaare übereinander angeordnet sein (Figur 6) und die Elektroden innerhalb des Speisers können der Länge nach gesehen in verschiedenen Höhen, also höhenversetzt angeordnet werden. Bei der Anordnung der Elektrodenpaare übereinander und einer quer zur Glasstromrichtung verlaufenden Stromrichtung ist dabei für den Fachmann überraschend, daß sich die Stromfäden gegenseitig verdrängen, wodurch eine Beeinflussung und Temperierung des gesamten Querschnitts des Glasstromes erreichen läßt.

Erfindungsgemäß körnen die waagerecht eingebauten Elektroden von relativ großer Länge, z. B. 200 - 400 mm, seir. Die Elektroden liegen sich gegenüber und ihre Spitzen sind weitgehend aneinander angenähert, auch wenn durch die Schaltung ein Stromfluß zwischen sich gegenüberliegenden Elektroden nicht erfolgt. Für den Fachmann überraschend hat sich mit dieser Anordnung eine besonders günstige Homogenisierung und Beeinflussung des Glasstromes herausgestellt. Wenn allerdings Elektroden mit geringer Eintauchtiefe gemäß Figur 4 oder 6 verwendet werden, ist eine Schaltung erforderlich, bei der ein Stromfluß quer zur Flußrichtung des Glases erfolgt.

Patentansprüche:

1. Elektrisch beheizter Speiser eines Glasschmelzofens, bei welchem in den Glasstrom stabförmige Elektroden eintauchen, zwischen denen elektrischer Strom zur Homogenisierung der Temperatur des Glasstromes fließt, wobei die Elektroden jeweils paarweise eingesetzt sind und die Ausgänge der Sekundärwicklung eines Regeltransformators mit mindestens je einer Elektrode eines Paares verbunden sind, dadurch gekennzeichnet, daß die Elektroden jedes Paares mit Abstand voneinander nebeneinander in den Speiserseitenwänden eingesetzt sind und jeweils zwei Elektroden an verschiedener Seitenwänden angeordnet sind.

2. Elektrisch beheizter Speiser nach Anspruch 1, dadurch gekennzeichnet, daß die Elektroden eines Paares an gegenüberliegenden Seitenwänden des Speisers angeordnet sind.

3. Elektrisch beheizter Speiser nach Anspruch 1 oder 2, dadurch gekennzeichnet, daß zwischen den Elektroden eines Paares die Elektroden eines weiteren Paares angeordnet sind, die sich gegenüberliegen.

4. Elektrisch beheizter Speiser nach einem der Ansprüche 1 bis 3, dadurch gekennzeichnet, daß die Elektroden zweier Paare sich gegenüberliegend übereinander angeordnet sind.

5. Elektrisch beheizter Speiser nach einem der vorhergehenden Ansprüche, dadurch gekennzeichnet, daß die Elektroden in der Länge des Speisers in unterschiedlichen Höhen angeordnet sind.

6. Elektrisch beheizter Speiser nach einem der Ansprüche 1 bis 3 und Anspruch 5, dadurch gekennzeichnet, daß sie eine relativ große Länge von 200 bis 400 mm aufweisen.

7. Elektrisch beheizter Speiser nach Anspruch 6, dadurch gekennzeichnet, daß die Spitzen der Elektroden weitgehend aneinander angenähert sind und ein Stromfluß nur zwischen in der selben Seitenwand angeordneten Elektroden erfolgt.

Fig. 1

Fig. 2

2/2

0080525

Fig.3

Fig.4

Fig.5

Fig. 6

# EUROPÄISCHER RECHERCHENBERICHT

**0080525**
Nummer der Anmeldung

EP 81 11 0005

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-1 201 655 (ELEMELT) <br> * Insgesamt * <br><br> --- | 1-4 | C 03 B 7/06 <br> H 05 B 3/00 |
| X | FR-A-2 350 309 (SOCIETE GENERALE POUR L'EMBALLAGE) <br> * Figur 1; Seite 2, Zeilen 29-40; Seite 3, Zeile 1; Ansprüche 1,2 * <br><br> --- | 1,2,7 | |
| A | EP-A-0 024 463 (SORG) <br> * Insgesamt * <br><br> ----- | 1 | |

### RECHERCHIERTE SACHGEBIETE (Int. Cl. ³)

C 03 B 5/00
C 03 B 7/00
H 05 B 3/00

Der vorliegende Recherchenbericht wurde für alle Patentansprüche erstellt.

| Recherchenort DEN HAAG | Abschlußdatum der Recherche 21-07-1982 | Prüfer VAN DEN BOSSCHE W.L. |
|---|---|---|